# EUROPEAN PATENT APPLICATION

(11) **EP 1 353 478 A1**
(43) Date of publication of application: **15.10.2003**
(21) Application number: 01999236.1
(22) Date of filing: 03.12.2001
(51) Int. Cl.: H04L 12/56, H04L 12/46

(54) **VIRTUAL PRIVATE NETWORK**

(30) Priority: 06.12.2000 JP 2000371841
(71) Applicant: NEC Corporation, Minato-ku, Tokyo 108-0014 (JP)
(72) Inventor: FUJIMOTO, Yoshinori, c/o NEC Corporation, Tokyo 108-0014 (JP); OHSAWA, Tomoki, c/o NEC Corporation, Tokyo 108-0014 (JP)
(74) Representative: Moir, Michael Christopher
(86) International application number: JP0110539
(87) International publication number: WO02047336

(57) **Abstract**

When an access-desired data base is set up in a private network, a public network, a contract provider for connecting the public network and the private network concerned, the private network in which the data base is set up, and a user terminal having an IP capsule encryption function for accessing the public network are used. The user terminal 10 connects to the contract provider 300 through the public network 200 at a visiting place, and achieves an IP address from the contract provider. The contract provider 300 accesses the private network 100 on the basis of the terminal request concerned, and the private network 100 authenticates an access of the terminal 10 concerned. The terminal 10 encrypts the communications, and carry out IP encapsulated communications through the public network 200 and the contract provider 300.

## Description

### FIELD OF THE INVENTION

The present invention relates to a virtual private network (VPN: Virtual Private Network) and particularly, to a virtual private network in which a user accesses a data base from the external through the Internet or the like as in the case of an electronic mail access. Furthermore, the present invention relates to a virtual private network (VPN) in which even when any user accesses from any one of plural networks whose operators are different from one another, the access can be performed with keeping secrecy between both the terminal points, and also information can be unitarily managed, so that the user can always access the latest data base from any place and at any time.

### BACKGROUND ART

A user who accesses networks from any place, such as a mobile user, generally accesses a network provided by a service business entrepreneur, that is, a contract providers through a public network. Such a mobile user utilizes a business data base by accessing a private network such as an office LAN or the like as an access manner other than the access manner using the public network. Since network environments are independently operated, it is impossible to access a data base from any network easily and with keeping secrecy. For example, with respect to electronic mails, a user uses the electronic mails by instructing such an action as mail-transfer or the like to his/her account of a contract provider in advance so as to fit the user's mobile environment.

When a user uses a file stored in an in-company file server at a visiting place, the user beforehand copies the file in his/her personal computer (PC) to be used on the move, or sends the file to his/her account with the file attached to a mail in advance, or attaches the required file to FTP (File Transfer Protocol of the Internet) site in advance and carries out SOCKS connection (substitutive connection or proxy connection) to download the file. However, the secrecy and security disadvantage imposes great limit on uploading.

Furthermore, in the case of VPN services based on IP capsule communications provided by a contract provider, capsule communications are carried out between an access point of the contract provider and a VPN access server in the contract provider. However, the communications between a terminal and an access point of the contract provider are generally carried out through a public network, and thus the communications are not encapsulated. In addition, IP addresses of data bases and home IP addresses are not encrypted on public networks , and this causes disadvantage in secrecy and security.

Still furthermore, a contract provider manages IP addresses from which data bases can be accessed. Therefore, when a data base is out of the management of the contract provider, the number of accesses must be restricted because the number of IP addresses to be managed is limited. In addition, contract providers which users can access are specified, and this is inconvenient for the users.

The IP capsule communication is not carried out between a VPN access server in a contract provider and an access server for managing the access to a data base, and thus it is required to physically shut off the communications between the VPN access server and the access server from the external by using a dedicated line or the like.

In the case of VPN services provided by a communication operator, addresses inherent to communication terminals are set in advance, and an identifier for determining.whether an access to a target network is allowed or not is allocated in a communication network in advance. Thereafter, authentication is carried out on an access to the target network on the basis of the identification and the terminal address or the like. In this case, since the access authentication to the target network is carried out in the communication network, no access is allowed in communication networks other than the communication network concerned. Therefore, terminals which are dependent on the communication network concerned and function only in the communication network concerned are required, and this reduces the degree of freedom for users.

Encryption on a communication network is dependent on the communication operator thereof, and the communications between the communication network concerned and the target network are normal IP communications, so that there is a secrecy disadvantage like the remote VPN services provided by the contact provider. Furthermore, since an IP address accessible to a target network or a terminal address which can be associated with the IP address is set in a terminal in advance or an identifier is allocated in advance, a communication operator must acquire these addresses from the operator of the target network and manage them. As a result, the number of accessible persons must be limited due to restriction to the number of addresses.

In a conventional file transfer technique such as mail transfer, the mail transfer is merely a one-way transfer operation from a transfer source to a transfer destination, and a subsequent change is never reflected because the file transfer is an operation carried out in advance. Accordingly, this technique does not perform the unitary management in one data base.

When a VPN service is provided through a public network, an IP packet signals containing the IP address of a data base and an IP address accessible to the data base are not encrypted between both the terminal points, and thus there is the secrecy disadvantage. Furthermore, in order to keep the secrecy of a data portion on a communication network to some extent, a special control procedure by a contract provider or communication network business entrepreneur is required on the communication network. Therefore, it is impossible for a user to freely select a contract provider or communication network extemporarily. Furthermore, since an encryption system and an encryption key are limited to those which a contract provider or communication network entrepreneur adopts, a data base manager cannot freely set the encryption system and the encryption key.

Therefore, an object of the present invention is to provide VPN services based on a terminal having an IP capsule communication and encryption function with which a data base put in a company or the like and desired to be accessed by a mobile user can be accessed through a public network or the like by using an access point of a user's contract provider at a visiting place while keeping secrecy and security and using no special secrecy system in the public network or the communication network provided by the contract provider, and also that can access plural data communication infrastructures at relatively high speed.

### SUMMARY OF THE INVENTION

In order to solve the above problem, a virtual private network according to the present invention is equipped with plural mutually-connected independent networks; a terminal that is accessible to the networks and has an IP capsule communication and encryption function using a newly-achieved transmission source IP address; a data base connected to any one of the networks ; and an access server that manages and controls the access to the data base and has an IP capsule communication and encryption function, wherein the terminal accesses the data base from any one of the networks with keeping secrecy by the IP capsule encrypted communications.

Concretely, in the case where the plural mutually-connected independent networks comprise a private network and a public network and also the data base to be accessed is set up in the privatenetwork, the virtual private network (VPN) of the present invention comprises the public network, a contract provider for connecting the public network and the private network concerned to each other, the private network in which the data base is set up, and the user terminal having the IP capsule encrypted communication function for accessing the public network.

Furthermore, in the case where the plural mutually-connected independent networks comprise a private network and a public network and also a data base having the same content as an access-desired data base set up in the private network is prepared at a contract provider side connected to the public network, the VPN of the present invention comprises the public network, the contract provider in which the data base is set up, the private network in which the data base is setup, and the user terminal having the IP capsule encrypted communication function for accessing the public network.

Still furthermore, in the case where a contract provider connected to a public network is entrusted with operations such as communications, management, etc. of the private network in which the data base is set up, thereby performing the operations and providing services, the VPN of the present invention comprises the public network, the contract provider for performing the operations and management of the data base, and a user terminal having the IP capsule encrypted communication function for accessing the public network.

Still furthermore, in the case where a user terminal is connected to a private network containing a domestic LAN or the like in which an access-desired data base is not set up and connected through the Internet to a target network in which an access-desired data base is setup, the VPN of the present invention comprises the private network, the target network in which the access-desired data base is set up, the user terminal having the IP capsule encrypted communication function and the Internet for connecting the private network and the target network.

Still furthermore, the user terminal used in VPN of the present invention may have means for setting the order of priority of the connection because it is based on the premise that the user terminal is connected to plural networks. The order of priority is (1) Wired Ethernet Connection, (2) Wireless LAN connection and (3) Public Network Connection. Furthermore, in the case of the Public Network Connection, when position information set on the user terminal such as the area code of a telephone number at the locating position of the user terminal or position information as a service at the public network side is achieved, the user terminal may be equipped with means for connecting the user terminal to an access point accessible at the lowest expense on the basis of the above position information by using a table in which position information preset in the user terminal is associated with the dial numbers or addresses of the access points which are accessible at the lowest expense.

### BRIEF DESCRIPTION OF THE DRAWINGS

Fig. 1 is a block diagram showing a virtual private network (VPN) according to a first embodiment of the present invention;
Fig. 2 is a sequence diagram showing the operation of the first embodiment of the present invention;
Fig. 3 is a table showing an example of parameters set in an access server and a user terminal;
Fig. 4 is a sequence diagram showing the operation of VPN when the user terminal cannot directly access a private network;
Fig. 5 is a sequence diagram showing an authentication procedure;
Fig. 6 is a sequence diagram showing an IP capsule communication;
Fig.7 is a block diagram showing VPN of a second embodiment according to the present invention;
Fig. 8 is a sequence diagram showing the operation of VPN of the second embodiment of the present invention;
Fig. 9 is a block diagram showing VPN of a third embodiment of the present invention;
Fig. 10 is a sequence diagram showing the operation of VPN of the third embodiment of the present invention;
Fig. 11 is a block diagram showing VPN of a fourth embodiment of the present invention;
Fig. 12 is a sequence diagram showing the operation of VPN of the fourth embodiment of the present invention; and
Fig. 13 is a sequence diagram showing addresses of IP packets.

### BEST MODE FOR CARRYING OUT THE INVENTION

Embodiments according to the present invention will be described hereunder with reference to the drawings.

### [First Embodiment]

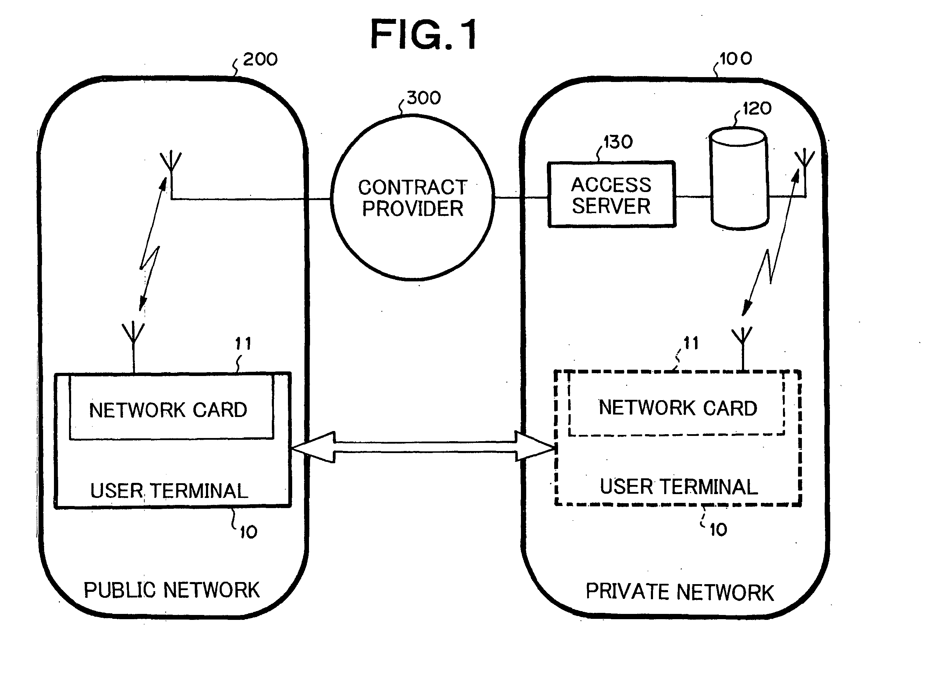

Fig. 1 is a block diagram showing a virtual private network (VPN) according to a first embodiment. VPN contains private network 100, public network 200, contract provider 300 for mediating the connection between the private network 100 and the public network 200, and user terminal 10 which is usable under such an environment as to be directly accessible to the private network 100 and is connected to the public network 200 at a visiting place.

The user terminal 10 comprises a portable information processing device such as a laptop computer or the like and network card 11 which can interface to the public network 200. The user terminal 10 has a function of accessing the public network 200 and an IP capsule encrypted communication function.

The user terminal 10 has a function of preferentially accessing the private network 100 under the environment that the user terminal 10 can directly access the private network 100, and also accessing the public network 200 under the environment that the user terminal 10 cannot directly access the private network 100. This function is implemented on the basis of functional restriction of the network card 11 mounted, by incorporating a judgment function based on the mount or dismount of the network card 11 into the user terminal 10 or by incorporating a connection prioritizing function for the network connection into the user terminal 10. The order of priority is determined to give the highest priority to the wired Ethernet connection, the second highest priority to the wireless LAN connection and the lowest priority to public network connections such as public mobile communications, public line or the like.

The private network 100 contains data base 120 to be accessed, an information processing device such as a workstation server or the like for managing and operating the data base 120, an access device to the user terminal, access server 130 that manages and controls the connection with the external and has a function of performing IP capsule encrypted communications with the external if necessary. The private network 100 has a function of performing the Internet communications with the contract provider 300.

The public network 200 is a communication network containing wireless communications of cellular phones, wireless LAN or the like, and has a function of providing the Internet communications between the contract provider 300 and the user terminal 10.

The contract provider 300 is used by a subscriber such as the user of the user terminal 10 or the like, and it comprises an information processing device such as a workstation server or the like. The contract provider 300 has a function of communicating with the user terminal 10 through the public network 200, a function of making the Internet communications with the private network 100 and a function of relaying the Internet communications between the user terminal 10 and the private network 100.

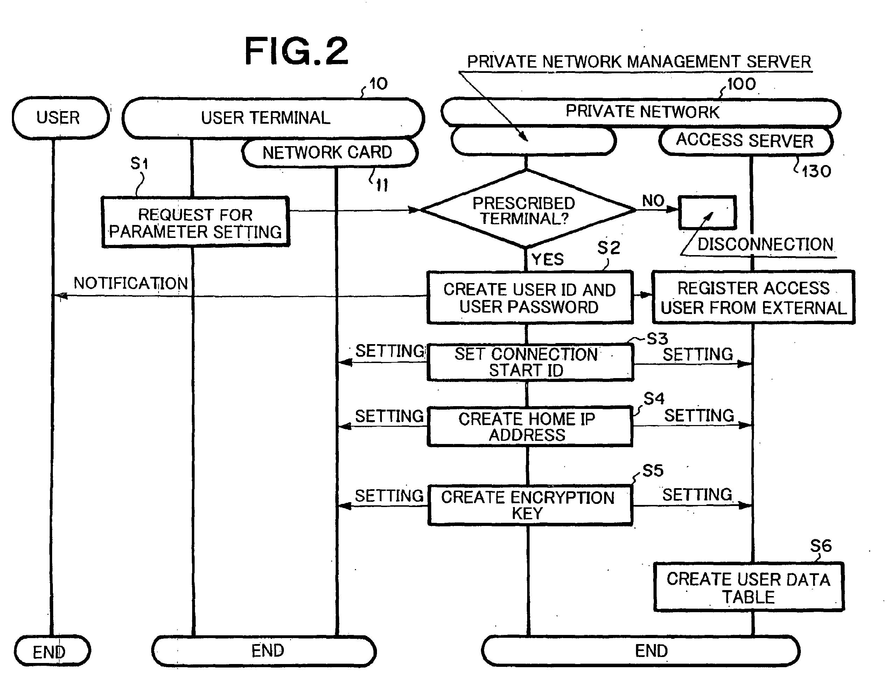

Fig. 2 is a sequence diagram showing the operation of the virtual private network (VPN) according to a first embodiment. The sequence diagram shows a procedure of presetting necessary IDs, etc. so that the data base 120 can be accessed from the external by using the user terminal 10.

First, in step S1, the user terminal 10 attempts to connect to the private network 100 according to the predetermined connection priority order. Normally, the wired Ethernet connection or the wireless LAN connection is used for the connection. Therefore, if higher priorities are given to these connections, the direct connection to the private network 100 through either connection is preferentially carried out under an environment that the user terminal 10 can directly access the private network 100. The user terminal 10 requests the setting of parameters for authentication when obtaining permission from the manager of the private terminal 100 to access the private network 100 from the external. If the user terminal is a prescribed terminal, the processing goes to step 2. If it is not a prescribed terminal, the operation is interrupted.

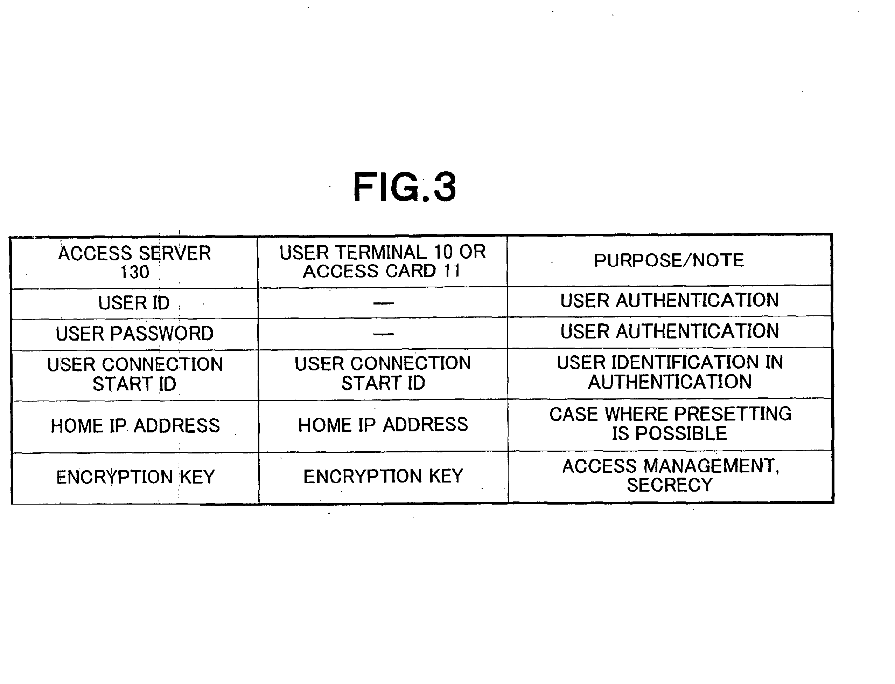

As shown in Fig. 3, the parameters associated with the access server 130 are a user ID, a user password, a user connection start ID, a home IP address, an initial encryption key, etc. The parameters associated with the user terminal 10 or the network card 11 are a user connection start ID, a home IP address, an initial encryption key, etc.

Subsequently, in step S2 , the user ID and the user password for the access server 130 are generated (created). The user ID and the user password thus generated are transmitted to the user and the access server 130.

Subsequently, in step S3, the access server 130, the user terminal 10 or the network card 11 generates the user connection start ID for initial recognition of the user.

Subsequently, in step S4, when a home IP address which can access the data base 120 can be set in advance, the IP address is generated as a parameter for the access server 130, the user terminal 10 or the network card 11.

Subsequently, in step S5, an encryption key is generated for the access server 130, the user terminal 10 or the network card 11.

Subsequently, in step S6, the access server 130 creates a user data table.

In Fig. 2, the steps S3, S4 and S5 are carried out on the network card 11, however, they may be carried out on the user terminal 10. When the network card 11 cannot be mounted in the user terminal 10 at the setting time, the steps from S3 to S5 are carried out on the user terminal 10, and then the parameters may be set offline in the network card 11.

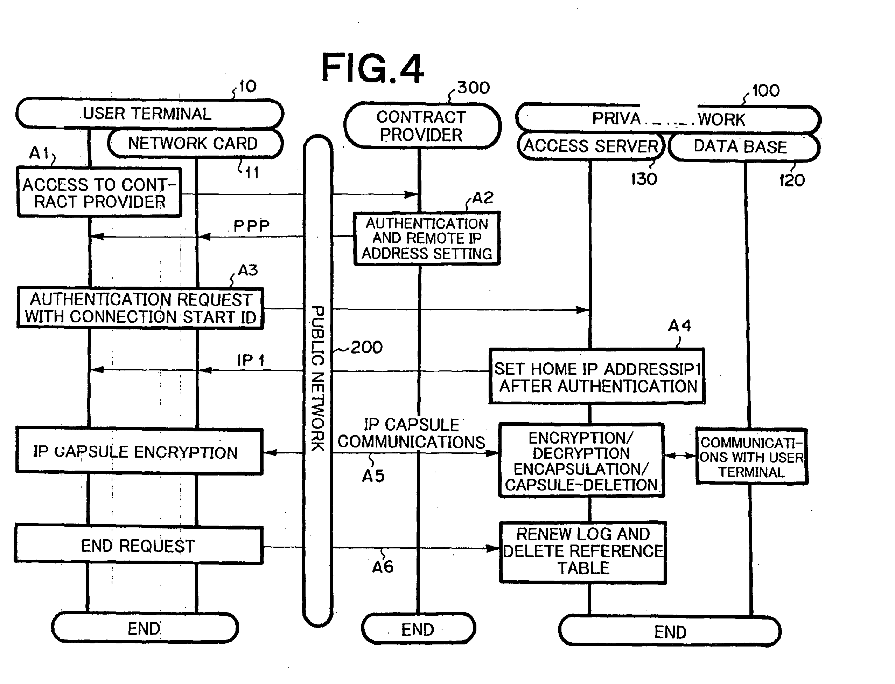

Fig. 4 is a sequence diagram showing the operation of VPN when the user terminal cannot directly access the private network

First, instep A1, the user accesses the provider 300 through the public network 200 by using the user terminal 10. When the user terminal 10 connects to the public network 200, the user terminal attempts the connection according to the order of priority if the priority order of the connection is set in the user terminal 10 in advance even when the public network 200 has plural connection styles such as the wired Ethernet connection, the wireless LAN connection, the mobile communication network connection, etc. Therefore, the user can discard a user's undesirable connection, and thus the user can select the most desirable connection in the order of high connection speed.

Furthermore, if the user beforehand sets in the user terminal 10 a table in which the positions of the user terminal are associated with the dial numbers or addresses of access points of the provider 300 which can be accessed from the positions at the lowest expense, the user terminal is equipped with a means that uses the table to connect the user terminal to an access point which can be accessed at the lowest expense when the user terminal is connected to the access point. For example, if a telephone area code is used as the position information of the user terminal, by merely inputting the telephone area code into the user terminal 10, the user terminal can connect to an access point which can be accessed at the lowest expense. When position information is achieved from the public network 200, the user terminal can be equipped with a means that uses it as the position information to automatically connect the user terminal to an access point which can be accessed at the lowest expense.

Subsequently, in step A2, the contract provider 300 carries out normal authentication of the user terminal 10, and then sends a remote IP address PPP managed by the contract provider 300 to the network card 11 of the user terminal 10. The user terminal 10 uses the remote IP address PPP as the network address.

Subsequently, in step A3, the user terminal 10 makes an authentication request to the access server 130 of the private network 100 through the contact provider 300. Accordingly, the user terminal 10 sends a packet containing the user connection start ID as data to the access server 130.

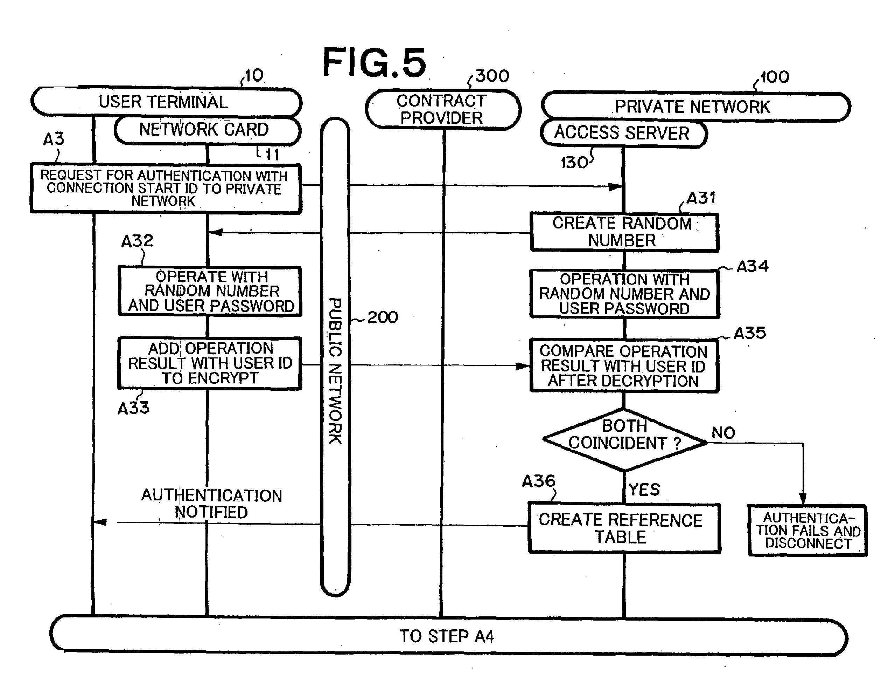

The authentication procedure after the authentication request is made will be described with reference to Fig. 5.

First, in step A31, the access server 130 generates (creates) a random number and sends it through the public network 200 to the user terminal 10.

Subsequently, in step A32, the user terminal 10 carries out an operation by using the random number thus sent and the user password.

Subsequently, in step S33, the operation result is added with the user ID, encrypted with the encryption key and then sent through the public network 200 to the access server 130.

In step A34, with the connection start ID as a clue, the access server 130 reads out the user password from the user data table created when the parameters are set, and the same operation as the user terminal 10 is carried out by using the user password and the random number.

Subsequently, in step A35, the operation result and the user ID sent from the user terminal 10 are decrypted, and then compared with the operation result achieved by the access server 130 and the user ID in the user data table.

Subsequently, in step A36, if as a comparison result, they are coincident between both the user terminal 10 and the access server 130, the authentication succeeds and a reference table for referring to the user data table from the remote IP address is created. On the other hand, if any one of the operation result and the user ID is not coincident, the authentication fails and thus a calling is broken.

The connection start ID and the encryption key may be renewed periodically or every time the user terminal is authenticated.

Referring to Fig. 4 again, the processing after the authentication procedure is finished will be described.

In step A4 after the authentication procedure shown in Fig. 5, after carrying out the authentication, the access server 130 encrypts, by using an encryption key, as internal IP address an IP address (IP1) which is used in the private network 100 and accessible to the data base 120, and then sends the IP address (IP1) to the user terminal 10 so that the user terminal 10 can access the data base 120 in the private network 100. The user terminal 10 decrypts the IP address (IP1) and sets it as an internal IP address.

When in step S4, manually or the like, the internal IP address of the user terminal 10 is beforehand set to an IP address which is used in the private network 100 and accessible to the data base 120, the step A4 may be omitted and thus the secrecy is further enhanced.

Subsequently, in step A5, IP communications based on IP encapsulation are carried out between the private network 100 and the user terminal 10 on the basis of the internal IP address.

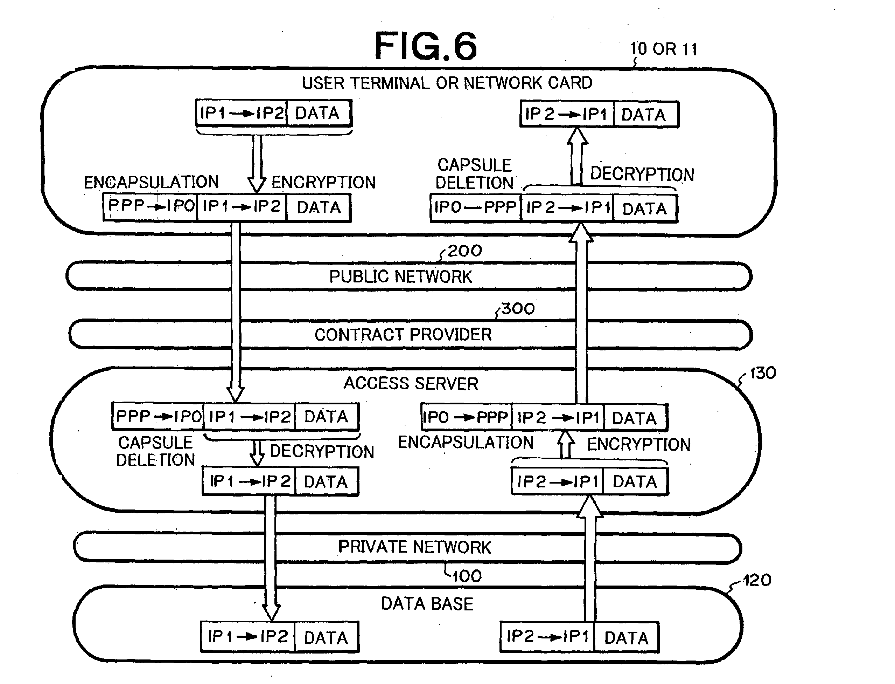

The IP capsule communications will be described hereunder with reference to Fig. 6.

First, IP packet data addressed from the internal IP address, that is, the home IP address IP1 to the IP address IP2 of the data base 120 are created in the user software of the user terminal 10. The user terminal 10 or the network card 11 mounted in the user terminal 10 encrypts the IP packet data. Furthermore, it is added with a header for addressing from the network IP address, that is, the remote IP address PPP to the IP address IP0 of the access server 130 to encapsulate the IP packet data. The encapsulated IP packet is delivered through the contract provider 300 to the destination IPO, that is, the access server 130.

The access server 130 refers to the reference table created after the authentication, picks up the encryption key in the user data table on the basis of the remote IP address PPP, removes the capsule from the IP packet data and then decrypts it. Accordingly, the packet is identified as packet data addressed from IP1 to IP2. Therefore, the access server 130 transfers the decrypted packet to the data base 120 through an office network.

On the other hand, when the decrypted IP address is different from the set address or when the checksum value or parity check value contained in the decrypted data is not a normal value, the packet is discarded because it is regarded as being impersonatedor interpolated, and if necessary, the communication is forcedly finished.

The communication from the data base 120 to the user terminal 10 can be performed in the opposite way to the above procedure. That is, the data base 120 creates an IP packet from IP2 to IP1, and delivers it to the private network 100.

Since the access server 130 recognizes that IP1 is out of the private network 100 at present, the access server 130 picks up and encrypts the IP packet, and then send the IP packet to the contract provider 300 while encapsulating the IP packet with an IP header addressed from IP0 to PPP.

The contract provider 300 sends the IP packet to the network card 11 of the user terminal 10 whose IP address is PPP. The user terminal 10 or the network card 11 removes the capsule from the IP packet, decrypts the IP packet and then delivers the IP packet to the user software.

The IP capsule communications have been described above with reference to Fig. 6.

A step A6 serving as a communication finishing step subsequent to the IP capsule communication of step A5 will be described with reference to Fig. 4, again.

In step A4 of Fig. 4 , when a disconnection request is output from the user terminal 10 or the access server 130, the access server 130 renews the communication log, deletes the reference table and finish the communications.

As described above, according to the first embodiment, the user can access the data base set up in the private network with safety even when the user stays at any place, and the data base can be unitarily managed and operated. For users, there is an advantage that the data base to be accessed is renewed to the latest one at any time. Furthermore, the IP encapsulation is carried out between both the terminal points of the private network 100 and the user terminal 10, and the inside of the capsule containing the internal IP address of the private network 100 is encrypted, so that the secrecy can be kept even through a public network or a general Internet provider. Furthermore, a communication packet between both the terminal points can be handled as a general IP packet for the public network and the contract provider, and thus neither a special device nor software is required for this communication in the public network and the contract provider.

### [Second Embodiment]

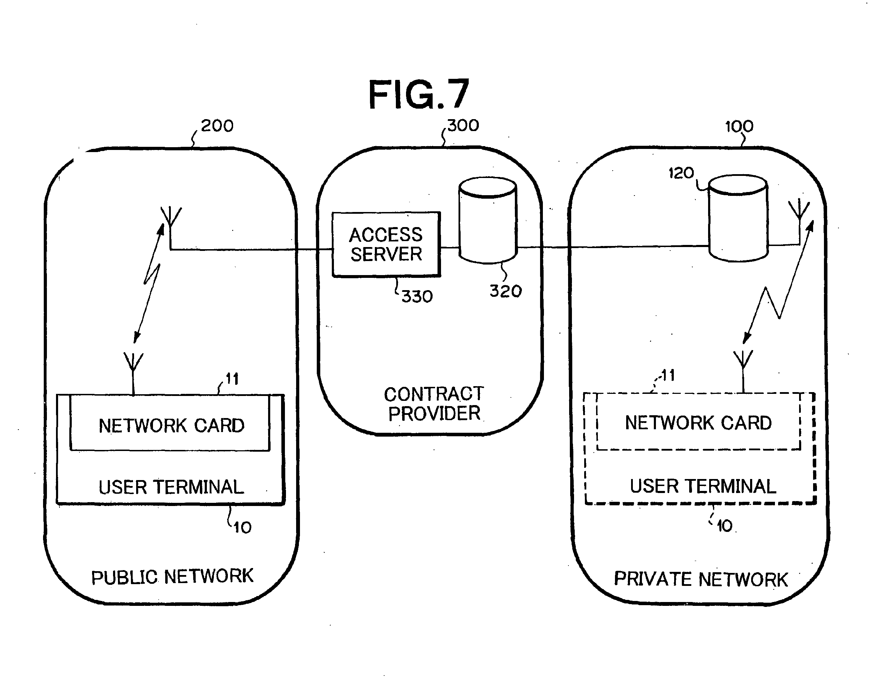

Fig. 7 is a block diagram showing a VPN according to a second embodiment of the present invention.

A data base 320 having the same information as the data base 120 set-up in the private network 100 is set up in the contract provider 300. The user terminal 10 connected to the public network 200 accesses the data base 320, and this point is different from the first embodiment. Synchronization of information is established between the data base 120 in the private network 100 and the data base 320 periodically or as occasion demands.

An access server 330 having the same function as the access server 130 setup in the private network 100 of the first embodiment is set up in the contract provider 300, and manages and controls the access from the external to the data base 320. The other points are the same as the first embodiment.

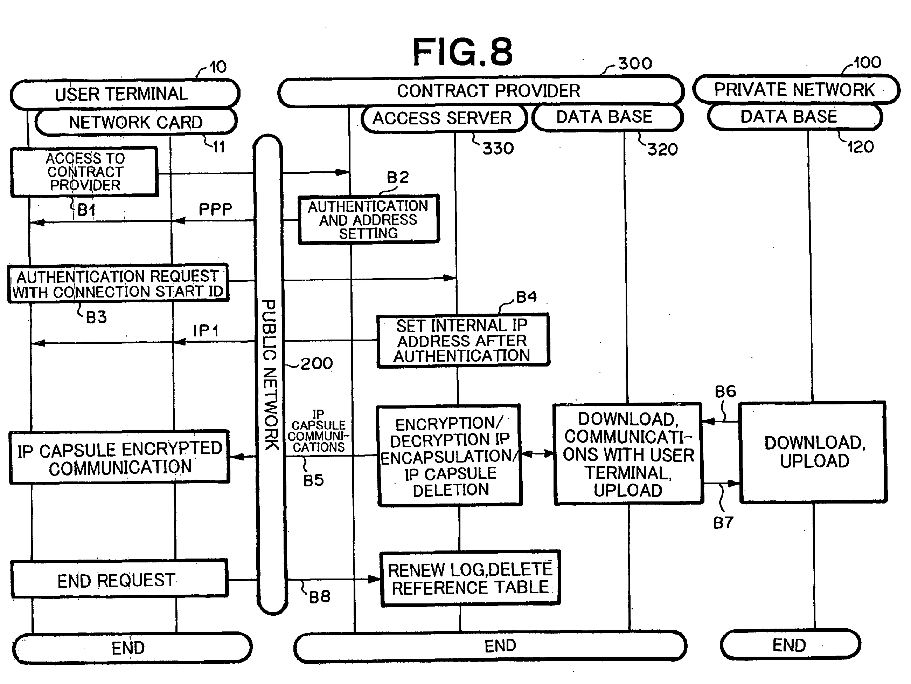

Fig. 8 is a sequence diagram showing the operation of the VPN according to the second embodiment. The step of presetting necessary IDS, etc. so that the data base 320 can be accessed from the external by using the user terminal 10 is different from the first embodiment only in that the user data table is additionally created to the access server 330. The other initial setting is the same as the first embodiment.

First, in step B1, the user accesses the contract provider 300 through the public network 200 by using the user terminal 10.

Subsequently, in step B2, the contract provider 300 sends the IP address PPP to the user terminal 10.

As described above, the steps B1, B2 are the same as the first embodiment.

Subsequently, in step B3, the user terminal 10 makes an authentication request to the access server 330. The details of the authentication process are the same as the first embodiment.

Subsequently, in step B4, after the access server 330 carries out the authentication, the home IP address IP1 is encrypted as an internal IP address of the user terminal 10 by using the encryption key as occasion demands, and then sent to the user terminal 10. The user terminal 10 decrypts the home IP address IP1 and sets it as the internal IP address thereof. However, for example, when a system of giving the IP addresses managed by the access server 330 to the user terminal 10 in advance and fixedly setting them into the user terminal before connection is adopted, the step B4 may be omitted and the secrecy can be further enhanced.

Subsequently, in step B5, the IP capsule encrypted communications are carried out between the access server 330 and the user terminal 10.

Subsequently, in step B6, the latest data or file is downloaded from the data base 120 of the private network 100 to the data base 320 of the contract provider 300 . The downloading is carried out until the user uses it or on the basis of a user's request.

Furthermore, in step B7 , data or file which has been changed, added, deleted or the like by the user is uploaded from the data base 320 into the data base 120. The uploading is carried out at the time point where the user's access is finished or on the basis of a user's request.

Subsequently, in step B8, the communications are finished as in the case of the first embodiment.

### [Third Embodiment]

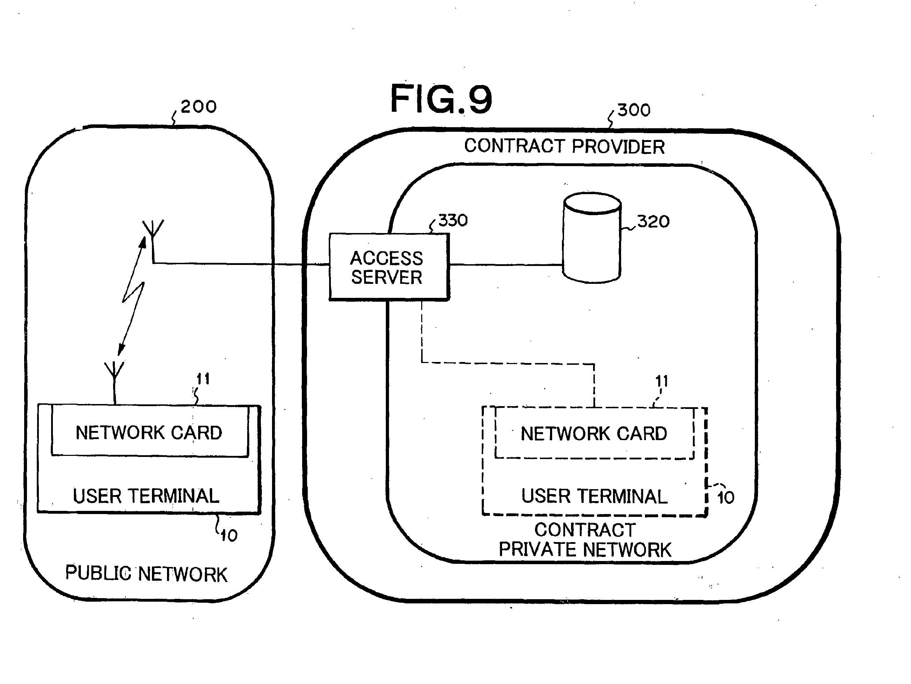

Fig. 9 is a block diagram showing a VPN according to a third embodiment of the present invention.

In this embodiment, the contract provider 300 is entrusted with the operation of the communications, the management, etc. of the private network 100. Accordingly, the data base 320 and the access server 330 accessing the data base 320 are set up in the contract provider 300.

The third embodiment is the same as the second embodiment in that the network card 11 to be connected to the public network 200 is mounted in the user terminal 10 and the user terminal 10 accesses the data base 320. However, the VPN of the third embodiment is different from the second embodiment in that it has only one data base.

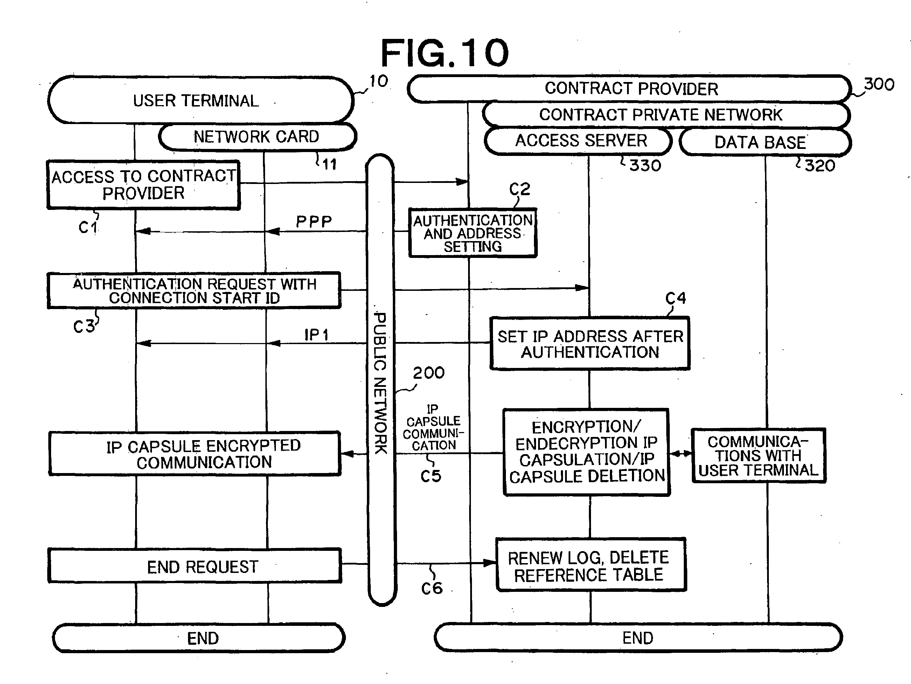

Fig. 10 is a sequence diagram showing the operation of the VPN of the third embodiment. The access to the contract provider (step C1), the setting of the IP address PPP (step C2), the authentication request based on the connection start ID (step C3) and the setting of the internal IP address IP1 (step C4) are the same as the steps B1 , B2, B3, B4 of the second embodiment, respectively. However, if the system of allocating IP1 in advance isadopted, the step C4 may be omitted, and the secrecy can be further enhanced.

Furthermore, the IP capsule communications (step C5) and the end of the communications (step C6) are the same as the steps A5, A6 of the second embodiment.

### [Fourth Embodiment]

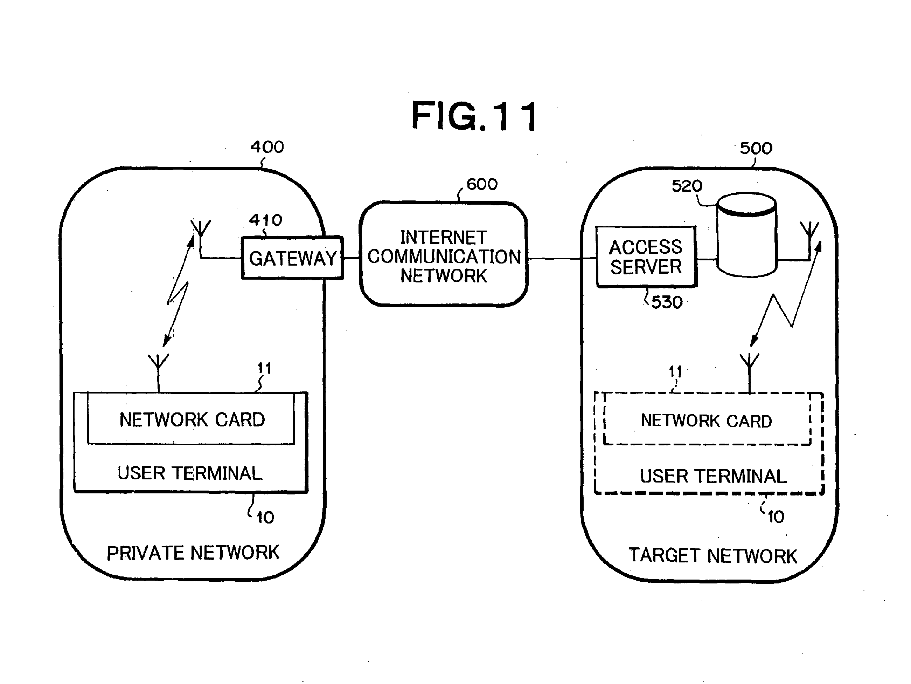

Fig. 11 is a block diagram showing a VPN according to a fourth embodiment.

In the fourth embodiment, the user terminal 10 connects to private network 400 such as LAN or the like in a branch office, and accesses data base 520 on target network 500 through Internet communication network 600. As described above, in the point that that the user first accesses the private network, this embodiment is different from the first to third embodiments in which the user first accesses the public network.

The VPN of the fourth embodiment contains user terminal 10 in which network card 11 is mounted, private network 400 to which the user terminal 10 connects, the Internet communication network 600 to be connected through gateway 410 of the private network 400, access server 530 for managing an access from the Internet communication network 600 in the target network 500, and data base 520 to which the user is going to access.

The user terminal 10 contains an information processing such as a laptop computer or the like, and the network card 11 serving as an interface to the private network 400. The user terminal 10 has a function of communicating with the private network 400, and an IP capsule encrypted communication function. Furthermore, the user terminal 10 can directly access the data base 520.

The Internet communication network 600 has a function of communicating with the gateway 410 of the private network 400 and the access server 530 of the target network 500.

The target network 500 contains the data base 520, an information processing device such as a workstation server or the like for managing and operating the data base 520, an access device to the user terminal, and the access server 530 having the function of managing and controlling the connection with the external and the function of performing the IP encapsule communications with the external.

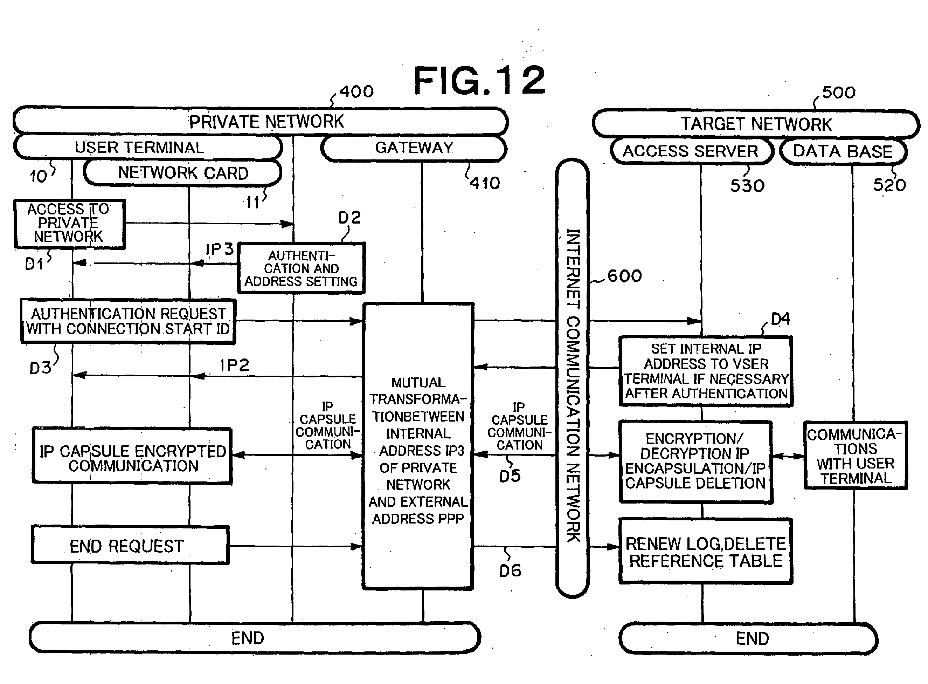

Fig. 12 is a sequence diagram showing the operation of the virtual private network of the fourth embodiment.

The step of presetting necessary IDs, etc. so that the data base 520 can be accessed from the external by using the user terminal 10 is substantially the same as the initial setting of the first embodiment. In the fourth embodiment, the necessary Ids, etc. are preset in the target network 500, and the user data table is created in the access server 530.

First, in step D1, a user to which an access right to the private network is given in advance uses the user terminal 10 to access the private network 400. Subsequently, in step D2, the private network 400 allocates an IP address IP3 managed by DHCP (dynamic host configuration protocol) server (not shown) or the like as an internal network address of the private network. However, in a small scale LAN or the like, when the internal network address of the private network is allocated to the user terminal in advance, it is unnecessary to execute the step D2.

Subsequently, in step D3, the user terminal 10 makes an access authentication request to the access server 530 through the gateway 410 of the private network 400 and the Internet communication network 600. In general, the gateway 410 converts IP3 to an effective global address PPP in the Internet communication network 600 by NAT (Network Address Transforming function) or the like. However, when IP3 is an effective address in the Internet communication network 600, no trouble would occur in the operation even if such transformation is not carried out. Accordingly, the transmission source address of the access authentication request IP packet containing the connection start ID as data is equal to PPP or IP3. As in the case of the first embodiment, the authentication is carried out on the transmission source address as the remote IP address.

Subsequently, in step D4, the home IP address IP1 used in the target network 500 is set. The IP1 is also used as the internal IP address in the target network 500 by the user terminal 10. Accordingly, when any internal IP address has not yet been set, the home IP address is encrypted and sent to the user terminal, and the user terminal decrypts the encrypted home IP address and sets it as the internal IP address.

AS described above, in step D5, the IP encrypted communications based on the IP encapsulation are carried out. Even when the mutual transformation between IP3 and PPP is carried out in the gateway 410, it is possible to perform the IP capsule encrypted communications insofar as the internal IP address is set.

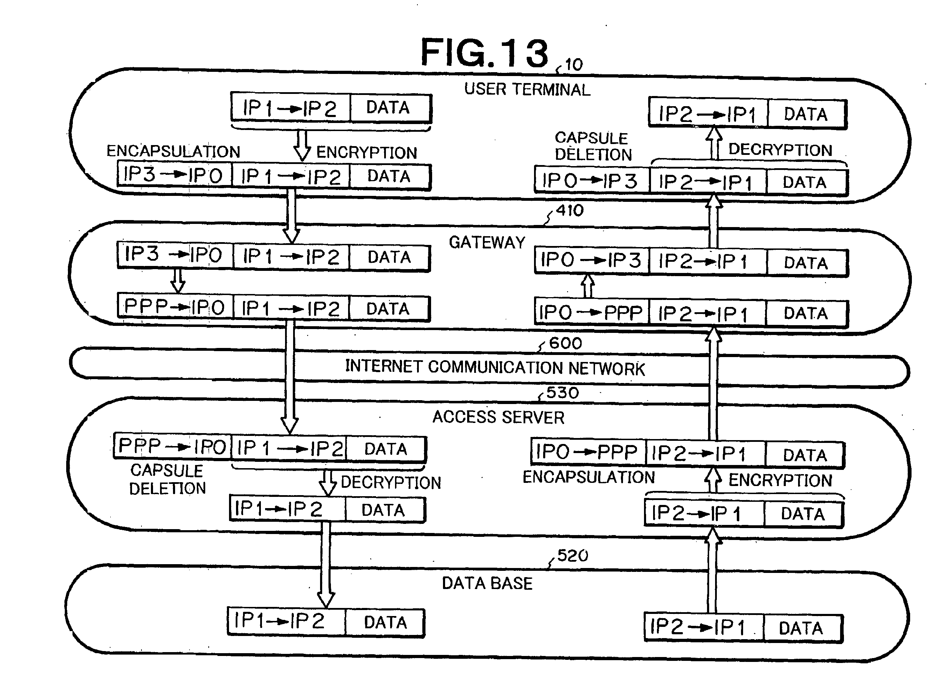

Fig. 13 is a sequence diagram showing the address of the IP packet.

In the user software of the user terminal 10 is created IP packet data in which a transmission source is set to IP1 (the home address in the target network 500) and a destination is set to IP2 (the IP address of the data base 520).

The user terminal 10 or the network card 11 mounted in the user terminal 10 encrypts the IP packet and then to the IP packet, a header which sets the transmission source to IP3 (the network address in the private network) and sets the destination to IPO (the IP address of the access server 530) is added, thereby encapsulating the IP packet, and sends the IP packet thus encapsulated to the gateway 410.

As occasion demands, the gateway 410 converts IP3 to PPP (which is a global address used in the Internet network and used as a clue to pick up a reference table for referring to user parameters set and created as the remote IP address by the access server 530), and sends the IP packet through the Internet work 600 to the access server 530.

In the access server 530, the user's encryption key having the remote address PPP or IP3 is taken out on the basis of the reference table created after the authentication, that is, a table containing the definite values of the set parameters, removes the capsule from the IP packet and decrypts the IP packet, whereby it is confirmed that the packet is a packet addressed from IP1 out of the target network 500 to the data base 520 having IP2, and thus the packet is transferred to the data base 520.

On the other hand, when the decrypted address is not a normal value or when the checksum value or parity check vale contained in the decrypted data is not a normal value, the packet is discarded because it is regarded as being impersonated or interpolated, and the processing is forcedly finished if necessary.

Even when a third party attempts to wiretap in the private network 400 or the Internet network 600, all the data containing the address are encrypted and the secrecy of the data is kept. In this invention, the encryption key is owned by only the user terminal 10 and the access serer 530.

The IP capsule encrypted communication from the data base 520 to the user terminal 10 can be performed in the opposite way to the above procedure.

Finally, in step D6, when a disconnection request is output from the user terminal or the access server 530, the access server renews the communication log, deletes the reference table for referring to the user table on the basis of the remote IP address PPP or IP3, and finishes the communication.

The embodiments of the present invention have been described, and a terminal having a wireless access means may be used as the user terminal. As the wireless access means may be used PHS (personal handyphone system), GPRS (general packet radio service), EDGE (enhanced data rates for GSM evolution), HDR (high data rate), WCDMA (wide band code division multiple access) , wireless LAN such as 2.4 GHz band wireless LAN, 5 GHZ band wireless LAN or the like, or Bluetooth which is a standard wireless communication technology for connecting mobile devices such as a personal computer, a cellular phone, etc. in a wireless mode. The wireless access means may be a high-speed wireless access means using a future mobile communication technology.

The user terminal may have a means for connecting the lowest-expense access point on the basis of position information when connecting to a public network. Furthermore, the position information may be judged on the basis of information transmitted from a base station.

### INDUSTRIAL APPLICABILITY

According to the present invention described above, communications having high secrecy between both terminal points can be provided in the VPN service. This is because the IP encapsulation is established between both the terminal points, and the IP addresses, etc. of both the terminal points in the capsules can be easily encrypted by unique encryption.

Furthermore, according to the present invention, the data base can be unitarily managed in the VPN service, so that users can access the latest data base at any time. This is because all the users are made to access the same data base even when they stay at any place.

Still furthermore, according to the present invention, present Internet communication networks such as a public network, a contract provider, etc. can be directly used. This is because the IP encapsulation communication is carried out between both the terminal points.

## Claims

1. A virtual private network, comprising:
plural mutually-connected independent networks;
a terminal capable of accessing said networks and having an IP capsule communication and encryption function using a newly-achieved transmission source IP address;
a data base connected to any one of said networks; and
an access server that manages and controls an access to said data base and has an IP capsule communication and encryption function,
wherein said terminal accesses said data base from any one of the networks by IP capsule encrypted communications while keeping secrecy.

2. The virtual private network according to claim 1, wherein the access from said terminal to said networks is performed by wireless access means.

3. The virtual private network according to claim 1, wherein said terminal contains wireless access means and said wireless access means is PHS, GPRS, EDGE, HDR, WCDMA, wireless LAN or wireless access means using Bluetooth.

4. The virtual private network according to claim 1, wherein said terminal or said access server encrypts the communications between said terminal and said data base.

5. The virtual private network according to claim 1, wherein said terminal is equipped with a network card having a communication interface fitted to each of said networks.

6. The virtual private network according to claim 5, wherein said network card has an IP capsule communication function.

7. The virtual private network according to claim 1, wherein said terminal has control means for preferentially using an interface for directly accessing said network having said data base.

8. The virtual private network according to claim 1, wherein said plural independent networks contain a private network and a public network, said data base being set up in said private network, when said terminal is connected to said public network to access said data base, said terminal and an access server of said private network are connected to each other after access authentication of said terminal, and said access server makes said terminal access said data base by IP capsule communications after the access authentication of said terminal has been carried out.

9. The virtual private network according to claim 8, wherein said terminal has means for connecting the lowest-expense access point on the basis of position information of said terminal when said terminal connects to said public network.

10. The virtual private network according to claim 9, wherein the position information is judged on the basis of information transmitted from a base station.

11. The virtual private network according to claim 1, wherein said plural independent networks contain a private network and a public network; said data base is setup in said private network; a data base having the same information as said data base is owned by a communication operating business entrepreneur of said public network or a service business entrepreneur to be connected; when said terminal connects to said public network to make an access request to said data base owned by the communication operating business entrepreneur or the service business entrepreneur to be connected, after access authentication to said data base owned by the communication operating business entrepreneur or the service business entrepreneur, said terminal is made to access said data base by IP capsule communications, and information is synchronized between said data base owned by the communication operating business entrepreneur or service business entrepreneur and said data base of said private network.

12. The virtual private network according to claim 11, wherein said terminal has means for connecting the lowest-expense access point on the basis of position information of said terminal when said terminal connects to said public network.

13. The virtual private network according to claim 12, wherein the position information is judged on the basis of information transmitted from a base station.

14. The virtual private network according to claim 1, wherein said plural independent networks contain a private network and a public network, said data base is set up in said private network; a communication operating business entrepreneur of said public network or a service business entrepreneur to be connected operates data communications/management of said private network or provides a private network service or data base service; and when said terminal connects to said public network to make a request for accessing said data base, said terminal is made to access the data base by IP capsule communications after the access to said data base has been authenticated.

15. The virtual private network according to claim 14, wherein said terminal has means for connecting to the lowest-expense access point on the basis of position information of said terminal when said terminal connects to said public network.

16. The virtual private network according to claim 15, wherein the position information is judged on the basis of information transmitted from a base station.

17. The virtual private network according to claim 1, wherein when, in order to access said data base, said terminal makes an access through a private network in which said data base is not set up, an access server of a target network in which the access-desired data base is set up makes said terminal to access said data base by IP capsule communications after the access of said terminal has been authenticated.
